# EUROPEAN PATENT APPLICATION

(11) **EP 1 365 564 A1**
(43) Date of publication of application: **26.11.2003**
(21) Application number: 03252753.3
(22) Date of filing: 30.04.2003
(51) Int. Cl.: H04M 1/663, H04M 19/04

(54) **System and method for incoming communication management for a communication device**

(30) Priority: 21.05.2002 US 152881
(71) Applicant: Hewlett-Packard Company, Palo Alto, CA 94304 (US)
(72) Inventor: Kimbell, Benjamin D., Fort Collins, CO 805252 (US); Anderson, James, Fort Collins, CO 80525 (US)
(74) Representative: Exell, Jonathan Mark

(57) **Abstract**

A communication device 100 comprises a communication interface 102 operable to receive incoming communication 204, a personal information manager 101 executable by the communication device, and an incoming communication manager 201 executable by the communication device to manage incoming communication received by the communication device based at least in part on information of the personal information manager.

## Description

The present invention relates in general to management of communication, and more particularly to a system and method for managing incoming communication for a communication device.

Various types of mobile communication devices are currently available, including, as examples, mobile telephones (e.g., cellular telephones), pagers, and personal digital assistants (PDAs), and new mobile communication devices are continually being developed. Certain mobile communication devices allow for a plurality of different types of communication. For example, hybrid cellular telephones are available that can be used for both data (e.g., fax, e-mail, and short-text messaging) and voice communication.

Also, personal information managers (PIMs) have been developed that generally allow a user to store, access, and/or organize personal information. PIMs traditionally include such types of software applications as electronic calendars, date books, contact lists, address books, and task lists, as examples, which enable a user to store, access, and/or organize personal information. Some examples of PIMs that are currently available include MICROSOFT OUTLOOK, LOTUS NOTES, TASKMINDER, and PIM ONLINE.

Many mobile devices include PIMs. Such mobile devices may be capable of interfacing with another device for synchronizing personal information managed by PIMs on each device. For example, a mobile communication device may be communicatively coupled to a personal computer (PC) to allow for information in the mobile communication device's PIM to be synchronized with information in the PC's PIM. Certain types of mobile communication devices have traditionally lacked a PIM. For example, mobile telephones have traditionally provided communication capability (e.g., voice communication and/or short-text messaging), but have traditionally not provided a PIM. PDAs, on the other hand, have traditionally included a PIM. Also, PDAs may provide for at least data communication. For example, PDAs may include a wireless modem (or interface for connecting to a digital mobile telephone) for gaining wireless access to e-mail and/or the Internet.

Mobile communication devices are increasingly including PIMs to enable greater functionality to a user. As the sophistication and functionality of mobile communication devices continue to evolve, mobile communication devices are becoming available that include both the functionality of providing one or more types of communication (e.g., data and/or voice communication) and PIM functionality in a common device. For example, mobile telephones that include a PIM therein (which may be referred to as "smartphones") have recently become available. Examples of currently available mobile telephones that include a PIM therein include QUALCOMM's PDQ smartphone, KYOCERA's QCP 6035 smartphone, MOTOROLA's V.Series^{TM} 60c phone, and NOKIA's 9210 COMMUNICATOR. For instance, KYOCERA's QCP 6035 smartphone includes the well-known PALM operating system, (which is capable of supporting a PIM), a mobile telephone, and a wireless modem within one device. The mobile telephone aspect of KYOCERA's smartphone allows for any of three popular modes of wireless network coverage: 1) Code Division Multiple Access (CDMA) digital Personal Communications Services (PCS), 2) CDMA digital cellular, and 3) analog.

Additionally, accessories are available that couple to compatible mobile telephones to transform them into smartphones. For example, MOTOROLA's CLIPON ORGANIZER -98177 is an accessory device that provides PIM functionality and may be coupled to a compatible mobile telephone to effectively create a smartphone having both communication capability and PIM functionality.

As a result of including a PIM within a mobile communication device, the total number of separate devices required by a user may be reduced. For instance, rather than having both a PDA that provides PIM functionality and a mobile telephone for communication, a user may choose to possess a mobile telephone that includes PIM functionality and may therefore eliminate the need for a separate PDA device.

According to one aspect of the present invention, a communication device comprises a communication interface operable to receive incoming communication, a personal information manager executable by the communication device, and an incoming communication manager executable by the communication device to manage incoming communication received by the communication device based at least in part on information of the personal information manager. Also, according to one embodiment of the present invention, a method of managing incoming communication for a mobile communication device comprises receiving information to a personal information manager, receiving incoming communication at the mobile communication device, and the mobile communication device autonomously determining an appropriate manner for handling the received incoming communication based at least in part on the information of the personal information manager.

Examples of the present invention will now be described in detail with reference to the accompanying drawings, in which:
Fig. 1 shows an example mobile communication device in which embodiments of the present invention may be implemented;
Fig. 2 shows an example implementation of an embodiment of the present invention;
Fig. 3 shows an example user interface that may be generated by a calendar application executing on a mobile communication device in accordance with an embodiment of the present invention;
Fig. 4A shows another example user interface that may be generated by a calendar application executing on a mobile communication device in accordance with an embodiment of the present invention;
Fig. 4B shows an example user interface 450 that may be presented to enable a user to specify user preferences to be utilized for a particular type of communication management;
Fig. 5 shows an example user interface that may be generated by a personal contacts application executing on a mobile communication device in accordance with an embodiment of the present invention;
Figs. 6A-6B show example operational flow diagrams of a preferred embodiment of the present invention.

Various embodiments of the present invention are now described with reference to the above figures, wherein like reference numerals represent like parts throughout the several views. With the proliferation of mobile communication devices, such as mobile telephones, a desire arises for improved management of incoming communication to such devices. For example, incoming communication is often received by a mobile communication device at inopportune times, and the audible notification of such incoming communication may undesirably disturb the owner of such mobile communication device and/or others. For instance, the audible ringing of a mobile telephone may be encountered at such inopportune times as during a movie, a play, a business meeting, an educational class, a religious ceremony, or various other situations in which such ringing is inappropriate.

Mobile communication devices commonly provide the ability for a user to manually disarm such audible notification of incoming communication. For instance, mobile communication devices often allow a user to power off the device, change the volume and/or tune of the audible notification, and/or activate a vibrate-mode for notification (in which the communication device vibrates to notify the user of a received incoming communication) in order to avoid inappropriate audible notification of a received communication. Thus, the user must manually turn on or turn off a feature, such as audible notification of incoming communication, at the time such result is desired. However, users often fail to perform such disarming of audible notification before an event during which such audible notification is inappropriate.

Embodiments of the present invention enable management of incoming communication to a mobile communication device based at least in part on information related to an event other than operation of the mobile communication device. In certain implementations, the event on which management is based includes at least one item that is not associated with operation of the mobile communication device. As described below, in a preferred embodiment, such an event may comprise a scheduled appointment, contact, or task for a user. Information related to such event may comprise personal information input to an application, such as an electronic calendar, for example. In this manner, certain embodiments of the present invention allow for a mobile communication device to autonomously perform event-driven management of incoming communication received thereby in which the mobile communication device autonomously controls its operation for handling received communication based at least in part on information (e.g., personal information) stored to such mobile communication device relating to at least one event (e.g., a scheduled appointment).

While applications are available in the existing art that allow a user to interact therewith to manually configure the operation of a mobile communication device (e.g., to modify the type of notification utilized by the mobile communication device for notifying the user of received communication), embodiments of the present invention enable the mobile communication device to autonomously manage its operation for handling received communication based at least in part on information related to an event that is not directly related to operation of the mobile communication device. For instance, based on information related to an event, such as a scheduled appointment, the mobile communication device may autonomously configure itself to provide an appropriate type of notification for received communication. More specifically, based on information related to an event, the mobile communication device may autonomously configure at least one notification parameter, such as activation of audible notification, type of audible notification, volume of audible notification, and/or activation of vibrational notification.

A preferred embodiment of the present invention enables management of incoming communication to a mobile communication device based at least in part on information in a personal information manager (PIM) application. For instance, personal information in a PIM application, such as a user's calendar of events, contact list, address book, task list, etc., executing on the mobile communication device may be utilized by such mobile communication device to enable it to autonomously control its operation in appropriately managing incoming communication.

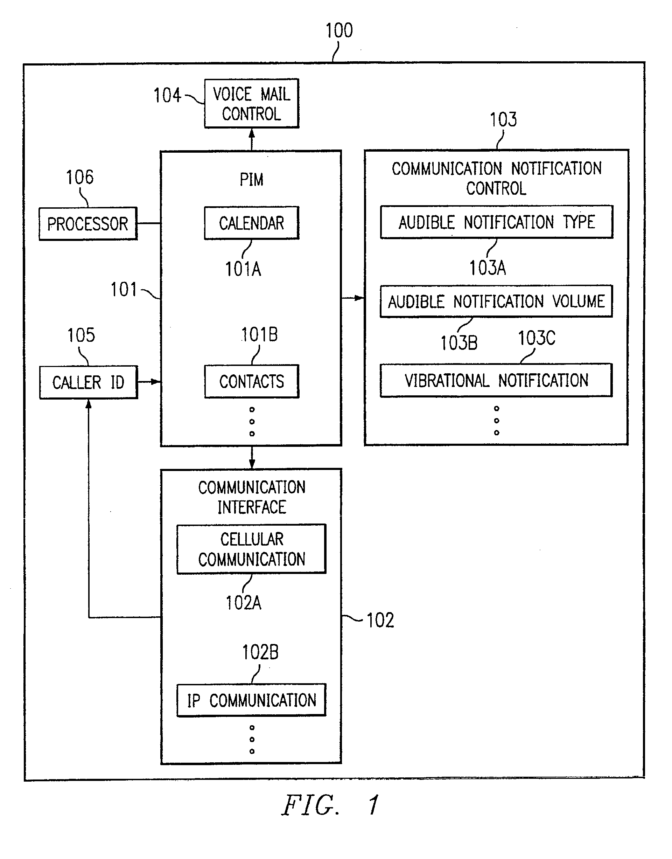

Turning to Fig. 1, an example mobile communication device 100 is shown implementing an embodiment of the present invention. Mobile communication device 100 may comprise any type of mobile communication device now known or later developed that is capable of at least receiving one or more types of communication (e.g., wireless or otherwise), including without limitation a mobile telephone (e.g., cellular telephone or hybrid cellular telephone), pager, and PDA. Thus, while various examples are provided herein describing embodiments of the present invention as implemented within a mobile telephone, it should be understood that embodiments of the present invention may be implemented with any type of mobile communication device.

Mobile communication device 100 is represented logically in Fig. 1 with example functional blocks 101-106 that may be included therein, as described more fully hereafter. It should be understood that each of functional blocks 101-106 may be implemented in hardware, software, firmware, or a combination thereof. Additionally, specific implementations of such functional blocks 101-106 are well-known in the existing art, which may be adapted to implement embodiments of the present invention that allow for management of incoming communication based at least in part on information from a PIM.

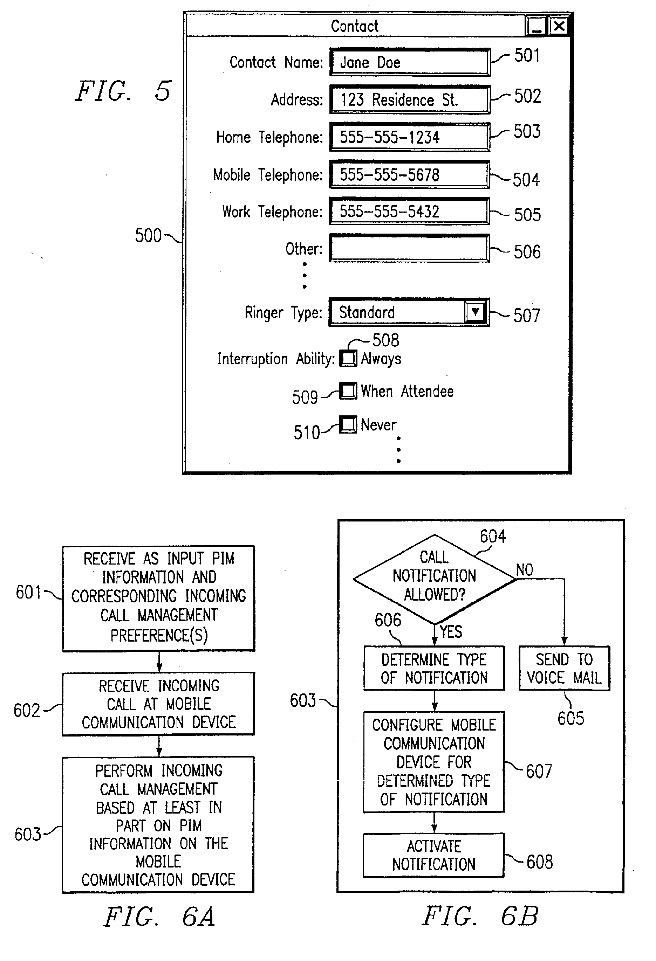

As shown in this example implementation, mobile communication device 100 includes PIM 101 that is executable by mobile communication device 100. More specifically, mobile communication device 100 may include at least one processor 106 that is operable to execute software instructions for executing PIM 101. Such processor 106 may be any suitable processor now known or later developed, including without limitation processors commonly implemented in mobile communication devices, such as HITACHI's SH3 processor, IBM's STRONGARM processor, and the ARM710 processor. The present invention is not restricted by the architecture of processor 106 as long as processor 106 supports the inventive operations as described herein. Processor 106 may execute the various logical instructions according to embodiments of the present invention. For example, processor 106 may execute machine-level instructions for performing incoming communication management, such as the instructions according to the example operational flow described hereafter in conjunction with Figs. 6A-6B.

PIM 101 is preferably included within mobile communication device 100, as with such well-known mobile telephone devices as QUALCOMM's PDQ smartphone, KYOCERA's QCP 6035 smartphone, MOTOROLA's V.Series 60c phone, and NOKIA's 9210 COMMUNICATOR, as examples. However, all or a portion of PIM 101 may be implemented in one or more accessory devices that are capable of being communicatively coupled to mobile communication device 100, as with MOTOROLA's well-known CLIPON ORGANIZER - 98177, for example. Also, any suitable operating system may be implemented on mobile communication device 100, such as MICROSOFT's WINDOWS operating system (e.g., WINDOWS CE) or the PALM operating system, as examples.

PIM 101 may comprise at least one application that enables a user to store, access, and/or organize personal information. For instance, in the example of Fig. 1, PIM 101 includes calendar application 101A and contact list application 101B. Implementations of such calendar and contact applications are well-known in the art, and any implementation now known or later developed for providing calendar and/or contact list functionality is intended to be within the scope of the present invention. Further, in certain embodiments, as described hereafter, such calendar and/or contact list applications may be adapted for use in managing incoming communication. In addition to or instead of calendar application 101A and contact list 101B, PIM 101 may include other applications that allow a user to store, access, and/or organize personal information, such as applications implementing a date book, address book, and/or task list, as examples. PIM 101 may be any PIM application now known or later developed, including as examples, MICROSOFT OUTLOOK, LOTUS NOTES, TASKMINDER, and PIM ONLINE, which may, in certain embodiments, be adapted for use in managing incoming communication.

In certain embodiments, a PIM application that is accessible by a user may not be included on the mobile communication device. Rather, in certain embodiments, a PIM application, such as PIM 101, may be included on another device to which mobile communication device 100 may be capable of at least temporarily communicatively coupling. For instance, PIM 101 may be stored on a personal computer (PC) to which mobile communication device 100 is capable of communicatively coupling to receive information from such PIM, and such information from the PIM may in turn be used by mobile communication device 100 in managing received communication, as described further below.

Mobile communication device 100 may further include one or more communication interface 102 that allows for receipt of incoming and/or transmission of outgoing communication. Communication interface 102 may comprise suitable interface(s) for any desirable type of communication, including as examples voice communication and/or data communication (e.g., email, short-text messaging, etc.). Any communication interface now known or later developed that may be implemented in a mobile communication device is intended to be within the scope of the present invention. For instance, communication interface 102 may comprise a wireless and/or wireline interface. For example, mobile communication device 100 may include a suitable interface for receiving and/or transmitting voice communication via a wireless communication protocol, such as cellular communication interface 102A. Cellular communication interface 102A may comprise any cellular interface now known or later developed, such as those commonly implemented in well-known cellular telephones. For example, cellular communication interface 102A may include any one or more suitable wireless communication technology now known or later developed, including without limitation CDMA digital PCS, CDMA digital cellular, analog, Time Division Multiple Access (TDMA), and Expanded Time Division Multiple Access (E-TDMA).

Mobile communication device 100 may additionally or alternatively include a suitable interface for receiving and/or transmitting data communication (e.g., via any suitable wireless or wireline communication protocol). In the example of Fig. 1, mobile communication device 100 includes Internet Protocol (IP) communication interface 102B, which allows for IP communication. Such IP communication interface 102B may be implemented in any manner, such as those well-known in the art, including without limitation a wireless or wireline modem. Mobile communication devices are commonly implemented to include such an IP communication interface. Other examples of such an interface for receiving and/or transmitting data communication include, but are not limited to, an Ethernet communication interface. Certain embodiments of the present invention enable management of incoming communication received via such communication interface 102 of mobile communication device 100 based at least in part on information in PIM 101.

Mobile communication device 100 further includes communication notification control 103. Such communication notification control 103 may comprise any suitable implementation now known or later developed for controlling notification of receipt of incoming communication by mobile communication device 100. As an example, mobile telephones commonly include some type of notification control that dictates how a user is to be notified of a received call. For instance, as is well-known, a mobile telephone may include functionality for allowing a user to specify a particular ringer type (e.g., particular tone or sequence of tones) to be utilized for audibly notifying the user of the receipt by the mobile telephone of an incoming call. A mobile telephone may further include well-known functionality for allowing a user to adjust the volume of the ringer to be utilized upon receipt of an incoming call. Additionally, a mobile telephone may further include functionality for allowing a user to set the mobile telephone to a vibrate mode (in addition to or instead of an audible notification), wherein the mobile telephone vibrates to notify the user of the receipt of an incoming call. Various other techniques for notifying a user of received incoming communication may be implemented in mobile telephones (or other mobile communication devices), and any notification technique now known or later developed is intended to be within the scope of the present invention.

In the example of Fig. 1, communication notification control 103 includes functional block 103A for controlling the audible notification type (e.g., ringer type ), functional block 103B for controlling audible notification volume (e.g., ringer volume), and functional block 103C for controlling the vibrate-mode of mobile communication device 100. Such functional blocks 103A-103C may be implemented in any manner, such as those well-known in the art. As described above, existing mobile communication devices allow a user to manually interact with such communication notification control block 103 to manually set such notification features as audible notification type (e.g., ringer type), audible notification volume, and vibrational notification. More specifically, a user may interact with an application for directly configuring the notification features of mobile communication device 100, and such application may, in response to user input, generate the appropriate commands to configure the notification features of device 100 in the manner specified by the user input. Certain embodiments of the present invention enable communication notification control 103 to be managed based at least in part on information in PIM 101. For instance, in certain embodiments mobile communication device 100 is operable to autonomously manage its communication notification control 103 based at least in part on PIM 101.

Further, in certain implementations of mobile communication device 100, such device 100 may include a call blocking application and/or a user may subscribe to a call blocking service that utilizes a call blocking application to block specified calls from mobile communication device 100. Call blocking applications are well-known in the art, and traditional call blocking applications are not personal information managers (PIMs) in that they do not manage any type of personal information for a user, such as with a calendar, appointment book, task list, etc. Instead, call blocking applications simply accept user-specified numbers for originating calls that the user desires to have blocked. In operation, upon detecting (e.g., via a caller ID device) that a call is received from a blocked number, the call blocking application does not allow the call to progress to the mobile communication device 100. This is analogous to the above-described applications that allow a user to manually set notification features, such as ringer type, volume, etc., in that a user can manually specify numbers to be blocked and the call blocking application performs the task of blocking the specified numbers. Again, traditional call blocking applications are not personal information managers.

Mobile communication device 100 further includes voice mail control block 104, which is operable for controlling features associated with a user's voice mail, such as controlling the personal greeting message to be audibly presented to a received incoming call. Such voice mail control block 104 may be implemented in any manner, such as those well-known in the art. For example, voice mail control functionality is commonly included in mobile telephones (or is implemented in an external application that is accessible by mobile telephones) to allow a user to interact therewith to establish a personal greeting message to be played for received incoming calls. For instance, before going into a meeting, a user may set his/her personal greeting message to notify incoming callers that he/she is in a meeting and should be available to return their call after its conclusion. Such setting of a user's personal greeting may comprise the user recording a new greeting or it may comprise the user activating a pre-recorded greeting, as examples.

In certain implementations, all or a portion of the voice mail control block 104 may be implemented external to mobile communication device 100. For instance, in certain implementations a user accesses an external application (e.g., by calling a particular telephone number for the voice mail service) and interacts with such external application to control features associated with the external voice mail application, such as administering a personal greeting. Whether voice mail control block 104 is integrated with or is external to mobile communication device 100, existing mobile communication devices allow a user to manually interact with such voice mail control block 104 to control features associated with voice mail. Certain embodiments of the present invention enable voice mail control 104 to be managed based at least in part on information in PIM 101. For instance, in certain embodiments mobile communication device 100 is operable to autonomously manage voice mail control 104 (e.g., to administer an appropriate personal greeting) based at least in part on PIM 101.

Mobile communication device 100 further includes caller identification (ID) block 105 that is operable for identifying from whom an incoming call is received. Such caller ID block 105 may be implemented in any manner, such as those well-known in the art. For example, caller ID functionality is commonly included in mobile telephones to identify the caller placing a received incoming call. As described further below, certain embodiments of the present invention may utilize caller ID information from caller ID block 105 in conjunction with information in PIM 101 to manage an incoming call received by mobile communication device 100.

It should be understood that not all of the functional blocks shown in example mobile communication device 100 need be included for operation in accordance with certain embodiments of the present invention. For example, in certain embodiments, voice mail control block 104 and/or caller ID block 105 may be omitted from a mobile communication device implementing the incoming management functionality of such embodiments.

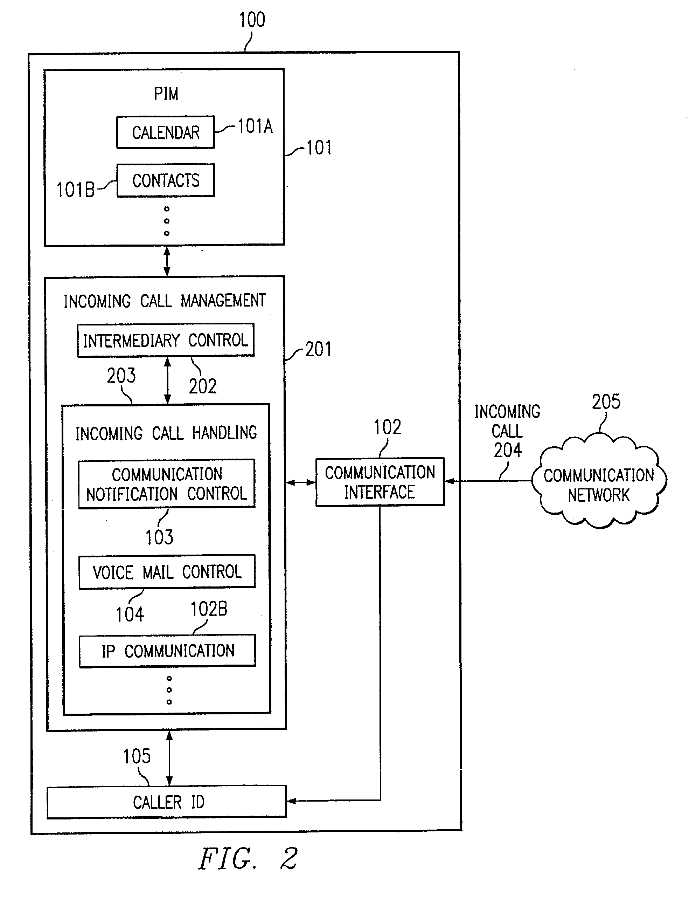

Turning to Fig. 2, an example implementation of an embodiment of the present invention is shown. In the example of Fig. 2, mobile communication device 100 is again provided including PIM 101, communication interface 102, and caller ID 105, as described above in Fig. 1. Additionally, incoming call management system 201 is included for managing incoming calls (or other incoming communication) received by mobile communication device 100. Incoming call management system 201 of the illustrated embodiment includes intermediary control block 202 that is preferably operable to interact with other functional blocks of mobile communication device 100 to manage a received incoming communication (e.g., call) based at least in part on information of PIM 101. For example, intermediary control 202 may interact with incoming call handling block 203, which preferably comprises communication notification control 103, voice mail control 104, IP communication interface 102B and/or other communication interfaces, for managing how a received incoming communication is handled by mobile communication device 100 based at least in part on information of PIM 101.

Intermediary control block 202 may be implemented in hardware, software, firmware, or any combination thereof. Further, even though illustrated as a separate logical block in the example of Fig. 2, all or a portion of such intermediary control block 202 may be integrated with one or more other functional blocks of mobile communication device 100, such as PIM 101 and/or communication interface 102, as examples. Also, intermediary control block 202 may be integrated within mobile communication device 100, or it may be implemented within an accessory device that may be coupled to such mobile communication device 100 to allow for incoming communication management based at least in part on PIM 101.

In operation of a preferred embodiment, an incoming call 204 is received by mobile communication device 100 from communication network 205. Communication network 205 may comprise any type of communications network now known or later developed, including, but not limited to, wireless communication network (e.g., cellular, CDMA, TDMA, E-TDMA, cellular digital packet data (CDPD), PCS), a local area network (LAN), a wide area network (WAN), modem to modem connection, the Internet, an intranet, and/or a combination of the above. Incoming call 204 may comprise a voice communication, such as a telephone call received by mobile communication device 100. Additionally or alternatively, incoming call 204 may comprise any other type of communication capable of being received by mobile communication device 100, such as an email message or other type of data communication, as examples. Call 204 is preferably received by mobile communication device 100 via the appropriate communication interface 102, and caller ID 105 may identify the caller placing call 204. In identifying the caller, caller ID 105 may provide the caller's name and/or may identify the number of the communication device (e.g., telephone number) from which the call is placed by the caller. If the number from which the call is placed is provided, in certain embodiments of the invention information from a contact list may be accessed by incoming call management system 201 to determine the identity of the caller (e.g., by comparing the number against one or more numbers, such as home telephone number, work telephone number, etc. associated with each contact).

In a preferred embodiment, incoming call management system 201 is operable to manage handling of incoming call 204 by mobile communication device 100 based at least in part on information of PIM 101. As used herein, "handling" of incoming communication does not require actively transferring and/or directing of the received communication, but may, for example, consist solely of configuring the notification control of a device to provide the proper type of notification of a received communication. Thus, while "handling" often encompasses transferring and/or directing of a received communication (e.g., transferring to voice mail), it does not require such transferring or directing of a received communication. Accordingly, handling is intended to encompass any action for configuring a communication device for responding to a communication received thereby (e.g., configuring the communication device to provide the proper type of notification and/or proper voice mail greeting, etc.).

For example, suppose a user has scheduled an appointment in calendar 101A for the time that incoming call 204 is received by mobile communication device 100; incoming call management system 201 may manage the operation of mobile communication device 100 for handling of call 204 thereby based at least in part on such scheduled appointment in calendar 101A. For instance, intermediary control 202 may, in response to such scheduled appointment, access communication notification control 103 to configure the appropriate notification settings to be utilized during the scheduled appointment. For instance, intermediary control 202 may issue the appropriate commands to communication notification control 103 to turn off audible notification and activate vibrate-mode notification for mobile communication device 100 during the scheduled appointment. Alternatively or additionally, intermediary control 202 may, in response to such scheduled appointment, access voice mail control 104 and modify the personal greeting to be played for a call received by voice mail during the scheduled appointment. Alternatively or additionally, intermediary control 202 may, in response to such scheduled appointment, access a communication interface, such as IP communication interface 102B, to modify an external service (such as an external voice mail or other messaging service) during the scheduled appointment. The management of incoming call 204 based on such an appointment in calendar 101A may be predefined, and in certain embodiments a user may provide input (e.g., preferences) specifying the type of management to be utilized by device 100 during the scheduled appointment, as described further below.

Incoming call management system 201 (e.g., intermediary control block 202) may be implemented to receive information from PIM 101 in any suitable manner. For example, in certain implementations incoming call management system 201 may periodically poll PIM 101 for any new information available therein. In other implementations, PIM 101 may notify incoming call management system 201 upon any changes or additions being made to the information of such PIM 101. In still other implementations, call management system 201 may poll PIM 101 for information upon mobile communication device 100 receiving incoming call 204. The specific information received from PIM 101 may vary depending on the implementation. That is, the information received from PIM 101 may depend upon the type of information that is utilized in a particular implementation for performing incoming call management. For instance, in certain implementations, incoming call management system 201 may receive information from a calendar application of PIM 101 from which incoming call management system 201 can determine a user's schedule (e.g., appointments, etc.). Additionally or alternatively, in certain implementations incoming call management system 201 may receive information from a contact list application of PIM 101 from which incoming call management system 201 may determine information about certain contacts (e.g., whether a particular contact is to be allowed to interrupt a scheduled appointment, whether a particular type of notification, such as a particular ring tone, is to be used for a particular contact, etc.).

Additionally, incoming call management system 201 may take action to configure mobile communication device 100 in response to a received call 204 and/or in advance thereof. For example, upon the time for the beginning of a scheduled appointment being encountered, incoming call management system 201 may configure the mobile communication device to the proper configuration to be utilized during such appointment (e.g., may configure the notification setting of the device to vibrational-mode instead of an audible notification, etc.). Additionally or alternatively, incoming call management system 201 may take action to configure mobile communication device 100 in response to a received call 204, such as configuring the notification setting of the device to a proper setting for the determined caller placing call 204.

In a preferred embodiment, intermediary control 202 may also utilize caller ID information from caller ID block 105 in managing incoming call 204. For instance, continuing with the above example, responsive to the scheduled appointment, intermediary control 202 may turn off audible notification for all received calls except those calls identified as being from a person scheduled to attend the appointment. Thus, for instance, intermediary control 202 may, in certain embodiments, access calendar 101A to determine the scheduled attendees of the appointment, and upon call 204 being received, intermediary control 202 may determine whether the identified caller (based on information from caller ID 105) is a scheduled attendee of the appointment. If determined that call 204 is from a scheduled attendee of the appointment, intermediary control 202 may manage such call 204 in a particular manner (e.g., may configure communication notification control 103 to allow for audible notification thereof), and if intermediary control 202 determines that call 204 is not from a scheduled attendee, it may manage such call 204 in a different manner (e.g., may configure communication notification control 103 to allow for only vibrational notification thereof). Accordingly, in certain embodiments, mobile communication device 100 may be dynamically configured to properly manage incoming communication based at least in part on information relating to an event, such as a personal appointment scheduled in calendar application 101A.

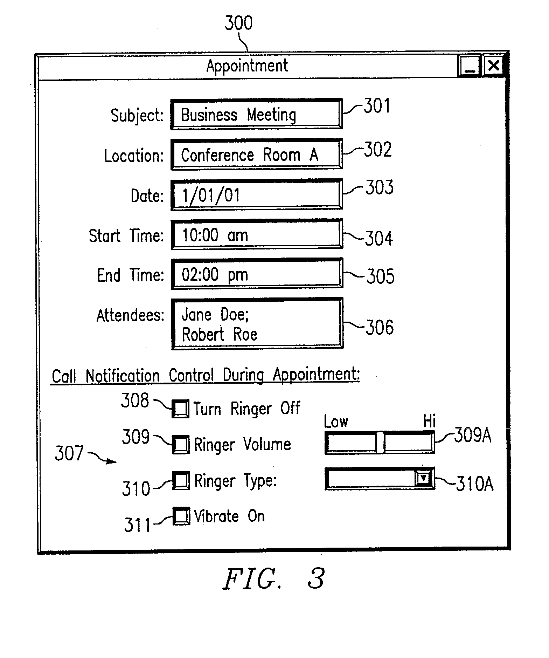

Turning to Fig. 3, an example user interface 300 is shown that may be generated by a calendar application, such as calendar application 101A of Figs. 1 and 2 adapted according to an embodiment of the present invention, that may be executing on a mobile communication device. User interface 300 allows for user input of information relating to an appointment in order to add such appointment to the user's calendar within the calendar application. For example, input box 301 allows a user to describe the subject (or type) of appointment being scheduled, which in the example of Fig. 3 is a "business meeting." Input box 302 allows a user to input a location of the appointment, which is "Conference Room A" in the example of Fig. 3. Input boxes 303, 304, and 305 allow a user to input the date, start time, and end time, respectively, for the appointment. In the example of Fig. 3, the appointment is scheduled for January 1, 2001 (as input to box 303), with a start time of 10:00 am (as input to box 304) and an end time of 2:00 pm (as input to box 305). Input box 306 allows a user to identify the attendees of the scheduled appointment, which include "Jane Doe" and "Robert Roe" in the example of Fig. 3. Calendar applications of the existing art commonly include code executable to generate a user interface comprising input boxes 301-306.

User interface 300 may also include a section that allows a user to input information specifying the user's preferences as to how incoming communication should be managed by the mobile communication device during the appointment. For instance, in the example of Fig. 3, user interface 300 includes section 307 that allows a user to input information specifying how notification of incoming communication should be managed by the mobile communication device during the scheduled appointment. More specifically, check-box 308 is provided to enable a user to select whether audible notification (e.g., a ringer) should be turned off during the appointment. Check-box 309 is provided to enable a user to specify whether a particular volume, as may be specified by the user via control bar 309A, is to be utilized for audible notification of incoming communication during the appointment. Check-box 310 is provided to enable a user to specify whether a particular ringer type, as may be specified by the user via input box 310A, is to be utilized for audible notification of incoming communication during the appointment. Additionally, check-box 311 is provided to enable a user to select whether a vibrational-mode of notification should be turned on during the appointment. Accordingly, when scheduling an appointment in the calendar application, a user may further specify his/her preferences regarding how incoming communication is to be managed during such appointment, and embodiments of the present invention enable management of incoming communication received by a mobile communication device based at least in part on information in a PIM, such as an appointment and/or user preferences associated with such appointment, to be utilized in managing incoming communication.

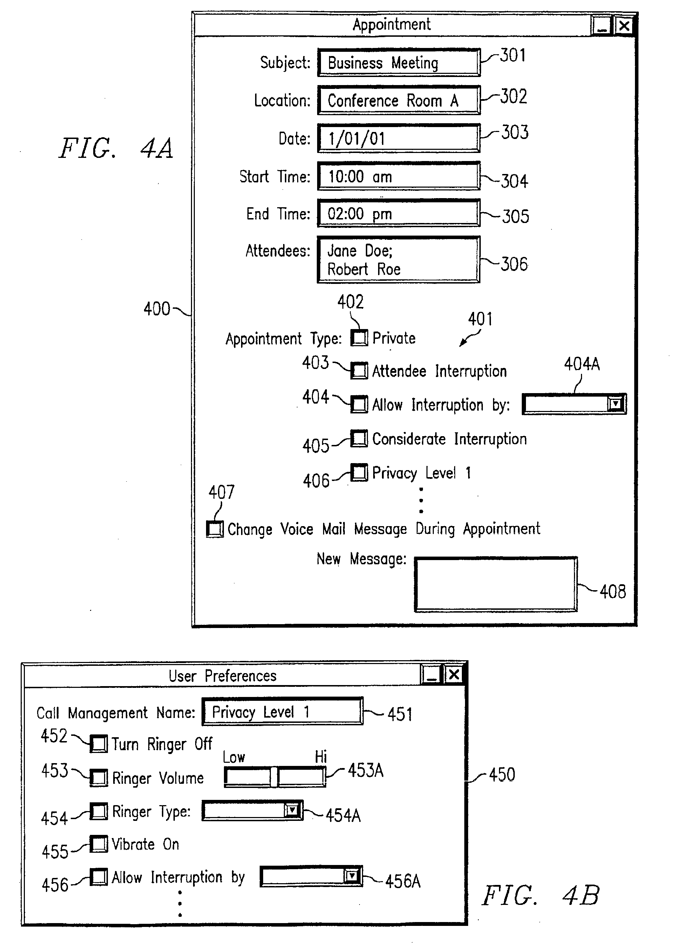

Fig. 4A shows another example user interface 400 that may be generated by a calendar application, such as calendar application 101A of Figs. 1 and 2 adapted according to an embodiment of the present invention, that may be executing on a mobile communication device. As with the example user interface 300 described above, user interface 400 includes input boxes 301-306 that allow for user input of information relating to an appointment in order to add such appointment to the user's electronic calendar.

User interface 400 may also include a section that allows a user to input information specifying the type of appointment being scheduled. More specifically, a section may be included that allows a user to specify the privacy to be afforded the scheduled appointment. For instance, in the example of Fig. 4A, user interface 400 includes section 401 that allows a user to input information specifying the type of appointment (or the privacy to be afforded the appointment) from which it may be determined how incoming communication received by the mobile communication device during the scheduled appointment should be managed by the mobile communication device. More specifically, check-box 402 is provided to enable a user to specify the appointment as "Private." As described further below, the specific management of incoming communication received during a "Private" appointment may be defined through user-specified preferences. Check-box 403 is included to allow a user to specify that it is appropriate for an attendee of the appointment to interrupt such appointment, whereby notification by the mobile communication device of incoming communication received during the appointment from a scheduled attendee is permitted. Check-box 404 is included to allow a user to specify that it is appropriate for person(s) specified by input box 404A to interrupt such appointment, whereby notification by the mobile communication device of incoming communication received during the appointment from such a specified person is permitted. Check-box 405 is included to allow a user to specify that "considerate interruption" of the appointment is to be permitted. Such "considerate interruption" may be defined through user-specified preferences, and may, for example, dictate the type of notification (e.g., whether audible or tactile), the volume of audible notification, the type of audible notification (e.g., the sequence of tones) to be utilized in providing a "considerate" notification of incoming communication received by the mobile communication device. Check-box 406 is included to allow a user to specify that a "privacy level 1" is assigned to the appointment, wherein such "privacy level 1" may be defined through user-specified preferences. In certain embodiments, any number of appointment types may be defined by a user with user-specified incoming communication management actions associated therewith, which may be available for specifying how incoming communication for a particular event (e.g., appointment) is to be managed.

In the example of Fig. 4A, user interface 400 further includes check-box 407 that enables a user to select whether to change his/her personal voice mail greeting during the appointment. Additionally, input box 408 is provided to allow a user to input the new voice mail greeting to be used during the appointment. For example, a new voice mail greeting may be input textually into input box 408, and upon an incoming call being received by the user's voice mail during the appointment, a text-to-speech converter may be used to convert the text of box 408 to speech to be played as a greeting to the received call. In certain implementations in which the voice mail is controlled via an external application, mobile communication device 100 may interact with such external application to properly manage the user's voice mail. For example, mobile communication device 100 may utilize IP interface 102B to communicate with an external application to configure the user's voice mail as desired (e.g., to set the personal greeting to that specified in box 408) for the scheduled event (e.g., appointment).

Figure 4B shows an example user interface 450 that may be presented to enable a user to specify user preferences to be utilized for a particular type of communication management. For example, a user may specify the preferences for the management types available for selection in user interface 400 (of Fig. 4A), such as "Private" (selectable via check-box 402), "considerate interruption" (selectable via check-box 405), and "Privacy Level 1" (selectable via check-box 406). Further, the user may define new management types that would then be available for selection via user interface 400 (of Fig. 4A).

In the example of Fig. 4B, "Privacy Level 1" is specified in input box 451 as the communication management name being defined. User interface 450 enables input information specifying the user's preferences as to how incoming communication should be managed by the mobile communication device in conjunction with the "Privacy Level 1" management type. More specifically, check-box 452 is provided to enable a user to select whether audible notification (e.g., a ringer) should be turned off for "Privacy Level 1." Check-box 453 is provided to enable a user to specify whether a particular volume, as may be specified by a user via control bar 453A, is to be utilized for audible notification of incoming communication for "Privacy Level 1." Check-box 454 is provided to enable a user to specify whether a particular ringer type, as may be specified by a user via input box 454A, is to be utilized for audible notification of incoming communication for "Privacy Level 1." Additionally, check-box 455 is provided to enable a user to select whether a vibrational-mode of notification should be turned on for "Privacy Level 1." Also, check-box 456 is included to allow the event (e.g., appointment) that is assigned "Privacy Level 1" to be interrupted with notification of incoming communication to the mobile communication device from person(s) identified in input box 456A. Thereafter, if "Privacy Level 1" is selected in user interface 400 (of Fig. 4A), the specified preference for such management type will be utilized in managing incoming communication received during the allocated event (e.g., appointment).

While the above examples shown in Figs. 3 and 4A provide a user interface for inputting information defining an appointment in a calendar application, embodiments of the present invention are not limited to such a calendar application. Rather, a preferred embodiment may be implemented with any PIM application. For instance, Fig. 5 shows an example user interface 500 that may be generated by a personal contacts application, such as contacts application 101B of Figs. 1 and 2, that may be executing on a mobile communication device. User interface 500 allows for user input of information relating to a user contact in order to add such contact within the contacts application. For example, input boxes 501-506 allow a user to input a contact's name, address, home telephone number, mobile telephone number, work telephone number, and other information related to the contact, respectively. More specifically, in the example of Fig. 5, the contact name input to box 501 is "Jane Doe." Jane Doe's address, 123 Residence St., is input to box 502. Jane Doe's home, mobile, and work telephone numbers are input to boxes 503, 504, and 505, respectively. If any other contact information were available for Jane Doe, such as her email address, pager number, etc., such information may be input to box 506. Personal contacts applications of the existing art commonly include code executable to generate a user interface comprising input boxes 501-506.

User interface 500 may also include a section that allows a user to input information specifying the user's preferences as to how incoming communication from the personal contact (e.g., Jane Doe) should be managed by the mobile communication device. For instance, in the example of Fig. 5, user interface 500 includes input box 507 to enable a user to select the type of audible notification (e.g., ringer type) to utilize for notifying the user of a received communication from the contact. For example, a particular sequence of tones may be selected for the user's supervisor and another sequence of tones may be selected for the user's spouse. Accordingly, the user may be capable of recognizing whom a call is from based on the type of audible notification provided by the mobile communication device.

Additionally, check-boxes 508, 509, and 510 are provided to enable a user to specify whether communication from the contact should be permitted to interrupt another event, such as a scheduled appointment in a calendar application. More specifically, the user may select check-box 508 to specify that the contact always be permitted to interrupt another event, such as an appointment. In this manner, irrespective of whether PIM information indicates that the user has scheduled another event for the time in which communication is received from the contact, notification of such communication from the contact will be provided by the mobile communication device to the user. The user may instead select check-box 509 to specify that the contact may be permitted to interrupt another event when the contact is designated as an attendee of such event. The user may instead select check-box 510 to specify that the contact should never be permitted to interrupt another event. Accordingly, when specifying personal contact information in the contacts application, a user may further specify his/her preferences regarding how incoming communication from such contact is to be managed, and embodiments of the present invention enable management of incoming communication received by a mobile communication device based at least in part on information in a PIM, such as personal contact information and/or user preferences associated with such personal contact information, to be utilized in managing incoming communication.

While in the above examples, the PIM application interface is adapted to allow for a user to specify his/her preferences as to the type of incoming call management to be performed in association with a particular event (e.g., during an appointment and/or for a call received from a particular contact), in certain implementations the PIM application interface (e.g., calendar interface, contact list interface, etc.) need not be so adapted. For example, in certain embodiments, an application program interface (API) may be defined and utilized by incoming call management system 201 to receive information from a PIM application (e.g., calendar application) from which incoming call management system 201 can determine the desired type of incoming call management. For instance, an API may be defined that incoming call management system 201 may use to interpret user input to a PIM application as a preference for a particular type of management. For example, incoming call management system 201 may include computer-executable software code that generates a user interface, such as the example user interface shown in Fig. 4B, to allow a user to define a type of management (e.g., "Privacy Level 1") and the user's preferences regarding the management actions to perform in association with such type of management. Thereafter, a user may enter "Privacy Level 1" in the narrative (or some other field) of an appointment in a calendar application, for example, and incoming call management system 201 may utilize an API to recognize such "Privacy Level 1" and interpret it as the defined type of management to be performed in association with the appointment. In this manner, the interface of the PIM application may not be modified at all, and the PIM application may not even be aware that incoming call management system 201 is gathering information from it on which to base incoming call management.

Further, in a relatively simple embodiment, incoming call management system 201 may use an API to gather information from a PIM application and may take predefined management actions upon encountering certain information. For instance, incoming call management system 201 may, in certain implementations, simply set the notification of a mobile communication device to disable audible notification and enable vibrational-mode during a scheduled appointment in a calendar application, and may otherwise configure the notification to provide audible notification of a received call. Thus, in this implementation, various "privacy levels" that dictate different types of management actions may not be provided with an event (e.g., a scheduled appointment), but rather a predefined management action may be performed upon encountering such an event.

Turning to Fig. 6A, an example operational flow diagram of a preferred embodiment is shown. As shown, in a preferred embodiment, the call management system (e.g., incoming call management system 201 of Fig. 2) receives PIM information and corresponding incoming call management preferences for such PIM information at operational block 601. For instance, an appointment scheduled in a calendar application and corresponding incoming call management preferences of a user (for such appointment) may be received by the call management system of a mobile communication device at block 601. At operational block 602, the mobile communication device may receive an incoming call (e.g., incoming telephone call, email message, etc.). At block 603, the call management system of such mobile communication device performs incoming call management for the received incoming call based at least in part on the PIM information. That is, the call management system controls the operation of the communication device to appropriately handle the received call based at least in part on the PIM information.

Fig. 6B further shows an example operational flow for performing the incoming call management of block 603. For example, the incoming call management system of the mobile communication device may determine, in operational block 604, whether call notification is allowed for a received call. Such determination may be made based at least in part on information of the mobile communication device's PIM. If determined at block 604 that call notification is not allowed for the received call, the call may be sent to voice mail at block 605. If, on the other hand, it is determined at block 604 that call notification is allowed for the received call, the incoming call management system may determine the appropriate type of notification to utilize in block 606. For instance, whether it is appropriate to utilize a particular type of audible notification (as well as the volume of such audible notification), vibrational notification, other type of notification, or a plurality of types of notification may be determined in operational block 606. Such determination of the appropriate types of notification may, for example, be made based at least in part on information from the PIM and/or user preferences stored to the mobile communication device.

Thereafter, in operational block 607, the incoming communication management system may configure the mobile communication device for the type of notification determined to be appropriate. For example, the incoming communication management system may communicate commands to the notification control block (e.g., block 103 of Figs. 1 and 2) to configure the mobile communication device for the appropriate type of notification. In operational block 608, such notification may be activated to notify the user of the received incoming call.

It should be understood that while various examples are described above for management of user notification of incoming communication, embodiments of the present invention are not intended to be limited solely to such notification management. Rather, any type of management of how a mobile communication device responds to received communication may be implemented in accordance with embodiments of the present invention. For instance, a mobile communication device may be implemented to autonomously manage voice mail configuration based at least in part on information of a PIM application.

Further, it should be understood that embodiments of the present invention are not intended to be limited solely to information in a PIM application. Instead, certain embodiments of the present invention may enable management of incoming communication to a mobile communication device based at least in part on user-input information to any executable application for defining an event that is not directly related to operation of the mobile communication device. For instance, in certain embodiments, the information defining at least one event may be stored to any type of application executable by a mobile communication device. The mobile communication device may comprise incoming communication manager that is operable for performing event-driven management of incoming communication received by the mobile communication device, wherein the incoming communication is managed in an appropriate one way selected from a plurality of different ways dependent at least in part on the information defining an event. The information defining an event, which is used by the incoming communication manager for managing the incoming communication, may comprise temporal data corresponding to the time that the incoming communication is received by the mobile communication device, scheduled appointment for a user corresponding to the time that the incoming communication is received by the mobile communication device, and/or identification data corresponding to identification of from whom the incoming communication is received, as examples.

While various examples have been provided above in which a PIM executes on a mobile communication device, in certain embodiments a PIM that is accessible by a user may not be available on the mobile communication device. For instance, in certain embodiments, the mobile communication device may be capable of at least temporarily communicatively coupling to another device (e.g., a PC) on which a PIM is accessible by a user. For example, the user may maintain his/her calendar on a calendar application executing on a PC, and a mobile communication device, such as a mobile telephone or PDA, may periodically be communicatively coupled to the PC to synchronize information from the PC's calendar application with calendar information maintained by the mobile communication device. For instance, the mobile telephone may maintain calendar information, although the mobile telephone may not provide a calendar application that is directly accessible to a user via such mobile telephone. Thereafter, the PIM information (e.g., calendar information) received by the mobile device from the PC (or other device) may be used as described herein for managing incoming communication.

Further, while embodiments of the present invention are particularly suited for implementation with a mobile communication device, as described above, certain embodiments of the invention may be implemented with a non-mobile device, such as a personal computer (PC). For example, embodiments of the present invention may be implemented on a PC to enable management of incoming communication received by the PC based at least in part on PIM information. For instance, PC's often have one or more communication interfaces, such as a data communication interface for receiving email communication (e.g., via a modem). Also, many email applications provide audible notification (e.g., chime) and/or visual notification (e.g., display a pop-up message on the PC's display) of a received email message. It may be desirable to have such notification of received email controlled based at least in part on information of a PIM that may, for example, be executing on the PC. For example, a user may schedule an appointment in a calendar application that is to take place in the user's office (e.g., where the user's PC is located), and incoming call management system 201 may be included on the PC to disable the audible notification of received email communication during the scheduled appointment such that the audible notification will not disturb/interrupt the scheduled appointment. Of course, an embodiment of the incoming call management system of the present invention may also be implemented on the user's mobile device(s), which may be synchronized with the PC, such that information about the scheduled appointment may be utilized to also manage incoming communication to the user's mobile device(s) during the appointment.

The disclosures in United States patent application No. 10/152,881, from which this application claims priority, and in the abstract accompanying this application are incorporated herein by reference.

## Claims

1. A communication device 100 comprising:
a communication interface 102 operable to receive incoming communication 204;
a personal information manager 101 executable by said communication device; and
an incoming communication manager 201 executable by said communication device to manage incoming communication received by said communication device based at least in part on information of said personal information manager.

2. The communication device of claim 1 or 2 wherein said personal information manager comprises at least one type of application selected from the group consisting of:
calendar 101A, contact list 101B, task list, address book, and date book.

3. The communication device of claim 1 wherein said incoming communication manager is executable to manage notification of said incoming communication.

4. The communication device of claim 3 wherein said incoming communication manager is executable to configure at least one notification parameter of said communication device selected from the group consisting of:
activation of audible notification, type of audible notification, volume of audible notification, and activation of vibrational notification.

5. A method of managing incoming communication for a mobile communication device 100, said method comprising:
receiving information to a personal information manager 101;
receiving incoming communication 204 at said mobile communication device; and
said mobile communication device autonomously determining an appropriate manner for handling the received incoming communication based at least in part on said information of said personal information manager.

6. The method of claim 5 wherein said appropriate manner for handling the received incoming communication comprises an appropriate notification of said incoming communication.

7. The method of claim 6 wherein said appropriate notification of said incoming communication comprises appropriate configuration of at least one notification parameter selected from the group consisting of:
activation of audible notification, type of audible notification, volume of audible notification, and activation of vibrational notification.

8. The method of claim 5, 6 or 7 wherein said information of said personal information manager comprises information associated with at least one type of application selected from the group consisting of:
calendar 101A, contact list 101B, task list, address book, and date book.

9. An incoming communication management system for a mobile communication device 100, said system comprising:
means 102 for receiving incoming communication 204 at said mobile communication device;
means 101 for storing information defining at least one event; and
means 201 for performing event-driven management of an incoming communication received at said mobile communication device, wherein said incoming communication is managed in an appropriate way selected from a plurality of different ways dependent at least in part on said at least one event.

10. The system of claim 9 wherein said information defining said at least one event comprises at least one selected from the group consisting of:
temporal data corresponding to the time that said incoming communication is received by said mobile communication device, scheduled appointment for a user corresponding to the time that said incoming communication is received by said mobile communication device, and identification data corresponding to identification of from whom said incoming communication is received.
